# EUROPEAN PATENT APPLICATION

(11) **EP 2 273 842 A2**
(43) Date of publication of application: **12.01.2011**
(21) Application number: 10167057.8
(22) Date of filing: 23.06.2010
(51) Int. Cl.: H04W 74/08

(54) **Improving component carrier identification in a random access procedure in a wireless communication system**

(30) Priority: 23.06.2009 US 219391 P; 22.06.2010 US 821110
(71) Applicant: HTC Corporation, Taoyuan County 330 (TW)
(72) Inventor: Hsu, Chia-Chun, 330, Taoyuan City Taoyuan County 330 (TW); Jen, Yu-Chih, 330, Taoyuan City Taoyuan County 330 (TW)
(74) Representative: 2K Patentanwälte Blasberg Kewitz & Reichel

(57) **Abstract**

A method of improving component carrier identification in a random access procedure for a user equipment of a wireless communication system includes transmitting a random access preamble on an uplink component carrier to a network of the wireless communication system by using a physical random access channel resource corresponding to an anchor component carrier of a plurality of downlink component carriers, so that the network identifies the anchor component carrier according to the physical random access channel resource used for transmitting the random access preamble.

## Description

The present invention relates to a method of improving component carrier identification in a random access procedure in a wireless communication system and related communication device.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs). The LTE radio protocol stack includes the Layer 3, also known as the Radio Resource Control (RRC) layer, the Layer 2, consisting of three sub-layers that are the Packet Data Convergence Protocol (PDCP) layer, the Radio Link Control (RLC) layer, and the Medium Access Control (MAC) layer, and the Layer 1, also known as the Physical (PHY) layer.

Recently, the 3GPP is involved in the further advancements for E-UTRA and proposes an LTE-Advanced system as an enhancement of the LTE system. Carrier aggregation, where two or more component carriers are aggregated, is introduced into the LTE-Advanced system in order to support wider transmission bandwidths, e.g. up to 100MHz and for spectrum aggregation. A UE of the LTE-Advanced system can simultaneously receive and/or transmit on multiple component carriers. Carrier aggregation allows a UE to aggregate a different number of component carriers of possibly different bandwidths in uplink (UL) and downlink (DL). In general, the number of component carriers and the bandwidth of each component carrier in UL and DL is the same in typical Time Division Duplexing (TDD) deployments. It would be reasonable for DL to have wider bandwidth than for UL, which means that it is possible that a UE has multiple DL component carriers match to a single UL component carrier.

This in mind, the present invention aims at providing a method of improving component carrier identification in a random access procedure in a wireless communication system and related communication device, for improving efficiency of anchor component carrier identification in a random access procedure for the network of a wireless communication system.

This is achieved by a method of improving component carrier identification in a random access procedure in a wireless communication system according to claims 1, 6, 8, 9, 10, 12, 14, and 15. The dependent claims pertain to corresponding further developments and improvements.

As will be seen more clearly from the detailed description following below, the claimed method for improving component carrier identification in a random access procedure for a UE of a wireless communication system includes transmitting a random access preamble on an UL component carrier to a network of the wireless communication system by using a PRACH resource corresponding to an anchor component carrier of a plurality of DL component carriers, so that the network identifies the anchor component carrier according to the PRACH resource used for transmitting the random access preamble.

### Brief Description of the Drawings

FIG. 1 is a diagram illustrating the random access procedure according to the prior art.
FIG. 2 is a diagram of a physical layer random access preamble format according to the prior art.
FIG. 3 is a diagram of a MAC random access response according to the prior art.
FIG. 4 is a schematic diagram of an exemplary wireless communication system.
FIG. 5 is a schematic diagram of an exemplary communication device.
FIG. 6 to FIG. 13 are flowcharts of exemplary processes.

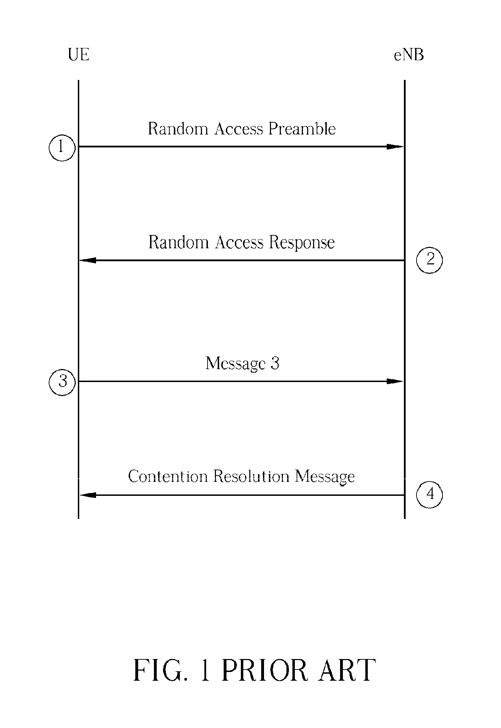

A random access procedure is initiated by the UE MAC layer for different events, including initial access from the RRC idle mode, RRC connection re-establishment procedure, handover, and DL or UL data arrival during the RRC connected mode requiring the random access procedure. Please refer to FIG. 1, which is a diagram illustrating a contention-based random access procedure according to the prior art. As shown in FIG. 1, the random access procedure consists of four steps, for transmitting (1) a random access preamble, from the UE to the eNB; (2) a random access response, from the eNB to the UE; (3) a scheduled transmission, called message 3, from the UE to the eNB; and (4) a contention resolution message, from the eNB to the UE. Information for performing the random access procedure, e.g. the available set of physical random access channel (PRACH) resources for the transmission of the random access preamble (which are time and frequency resources), the groups of random access preambles, the set of available random access preambles in each preamble group, the random access response window size, etc., are available before the random access procedure is initiated, and are delivered and updated from the UE RRC layer.

The UE MAC layer performs a random access resource selection procedure to select a random access preamble within a selected random access preamble group and select a PRACH resource. Note that, the random access preamble transmitted on the RACH is a 6-bit random access preamble index. After the random access resource selection procedure is completed, the UE MAC layer instructs the UE PHY layer to transmit the random access preamble by using the selected PRACH resource, corresponding random access radio network temporary identifier (RA-RNTI), preamble index and predetermined preamble power. The UE can use a random access preamble selected from total 64 random access preambles, and the 64 random access preambles are divided into two preamble groups for the contention-based random access procedure and the non-contention-based random access procedure.

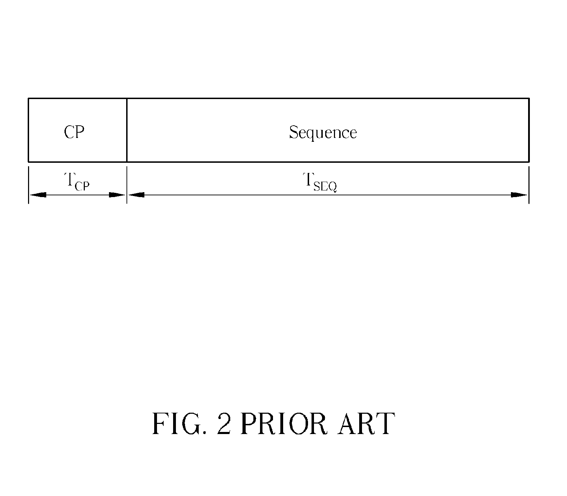

Please refer to FIG. 2, which is a diagram of a physical layer random access preamble format according to the prior art. A physical layer random access preamble transmitted on PRACH resources consists of a cyclic prefix of length T_{CP} and a preamble sequence of length T_{SEQ}. Current MAC specification defines five preamble formats numbered from 0 to 4 for different length configurations of the cyclic prefix and the preamble sequence. For example, the preamble format 0 indicates T_{CP}=3168 T_{S} and T_{SEQ}=24576 T_{S}, and the preamble format 1 is T_{CP}=21024 T_{S} and T_{SEQ}=24576 T_{S}, where T_{S} is the basic time unit. The preamble sequence of the physical layer random access preamble is a Zadoff-Chu sequences generated from one or several root Zadoff-Chu sequences.

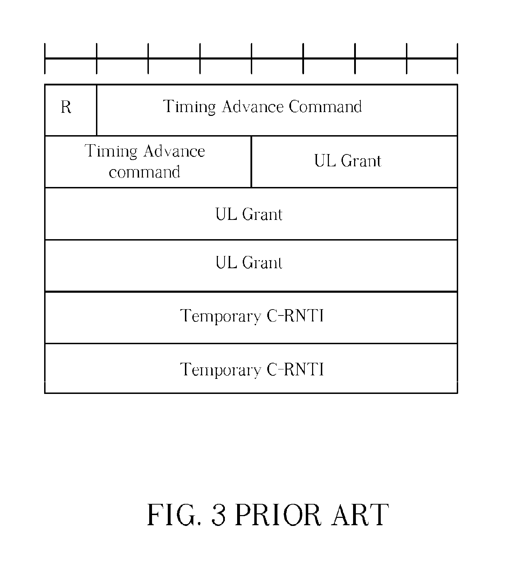

Once the random access preamble is transmitted, the UE monitors the physical downlink control channel (PDCCH) for a random access response in a specific time window. Please refer to FIG. 3, which is a diagram of a MAC random access response according to the prior art. The MAC random access response is in a MAC protocol data unit (PDU) following a corresponding MAC subheader including a 6-bit random access preamble identifier (RAPID), which indicates the transmitted random access preamble. The MAC random access response consists of reserved bit, timing advance command, UL grant, and temporary cell-RNTI. The UE MAC layer stops monitoring the PDCCH for the random access response after successful reception of a MAC PDU containing the MAC random access response and the random access preamble identifier that matches the transmitted random access preamble. After the MAC random access response is successfully received, the UE MAC layer processes the received UL grant and instructs the UE PHY layer to transmit the message 3 according to the UL grant.

From the above, when the UE is in the RRC idle mode, it is required to only monitor and/or camp one DL component carrier, called anchor component carrier. In order to establish a radio link with the eNB, the UE performs the random access procedure, beginning with transmitting a random access preamble on the UL component carrier specified in the system information. Under carrier aggregation, when the eNB receives a random access preamble on the UL component carrier, the eNB does not know the DL component carrier (anchor component carrier) of the UE since there are more than one DL component carriers mapped to the UL component carrier. Consequently, the eNB does not know which DL component carrier it should transmit a corresponding random access response on. This problem is called the anchor component carrier confusion.

To avoid the anchor component carrier confusion, a solution given in the prior art is that the eNB transmits the random access response on all DL component carriers. This solution requires no extra work for the LTE-advanced eNB and UE but wastes frequency resources. However, when the DL carrier aggregation is much higher than the UL carrier aggregation, i.e. DL component carriers are much more than UL component carriers, the resulted resource waste is unacceptable. At present, the LTE-Advanced specifications do not include solutions to determine the anchor component carrier efficiently.

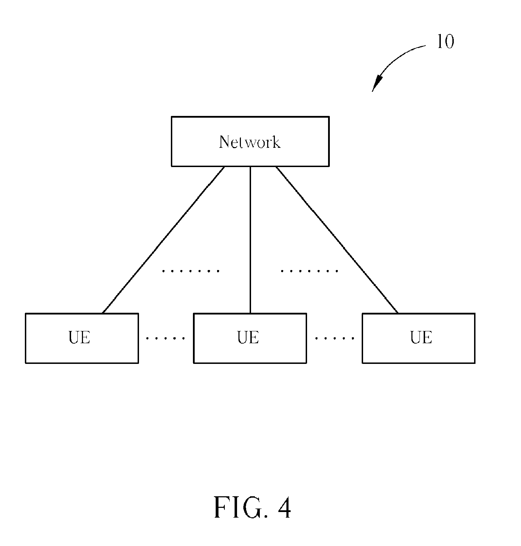

Please refer to FIG. 4, which illustrates a schematic diagram of an examplary wireless communication system 10. Briefly, the wireless communication system 10 is composed of a network and a plurality of mobile devices. The wireless communication system 10 can be an LTE-Advanced system or any other similar network system supporting carrier aggregation functionality. In the LTE-Advanced system, the network can be referred as an E-UTRAN (evolved-UTRAN) comprising a plurality of eNBs, and the mobile devices are referred as user equipments (UEs). The UEs can be devices such as mobile phones, computer systems, etc. This terminology will be used throughout the application for ease of reference; however, this should not be construed as limiting the disclosure to any one particular type of network. In some examples, the network and the UE may be seen as a transmitter or receiver according to transmission direction, e.g. for uplink (UL), the UE is the transmitter and the network is the receiver, and for downlink (DL), the network is the transmitter and the UE is the receiver.

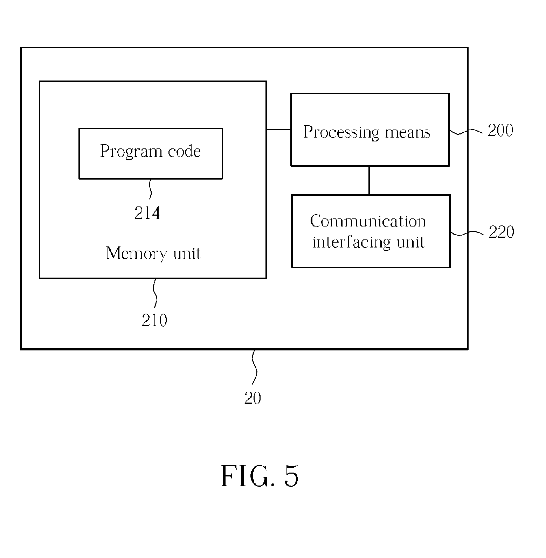

Please refer to FIG. 5, which is a schematic diagram of an exemplary communication device 20. The communication device 20 can be the UE or the network shown in FIG. 4 and may include a processing means 200 such as a microprocessor or ASIC, a memory unit 210, and a communication interfacing unit 220. The memory unit 210 may be any data storage device that can store program code 214 for access by the processing means 200. Examples of the memory unit 210 include but are not limited to a subscriber identity module (SIM), read-only memory (ROM), flash memory, random-access memory (RAM), CD-ROM, magnetic tape, floppy disk, and optical data storage device. The communication interfacing unit 220 is preferably a radio transceiver for wirelessly communicating according to processing results of the processing means 200.

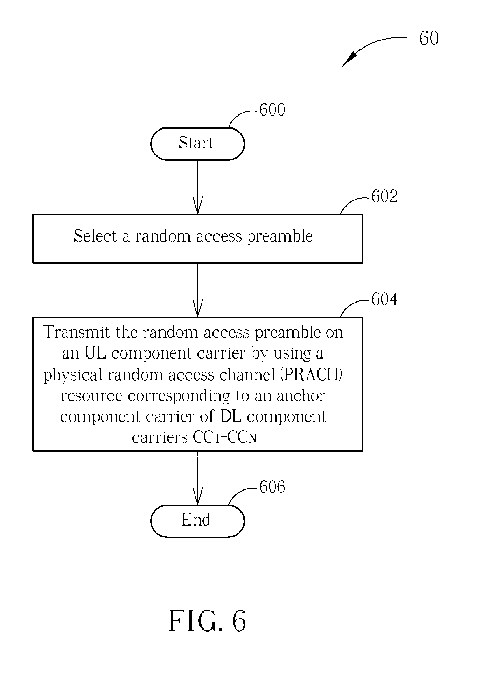

Please refer to FIG. 6, which is a flowchart of an exemplary process 60. The process 60 is utilized for improving component carrier identification in a random access procedure for a UE of the wireless communication system 10. The process 60 can be compiled into the program code 214. The process 60 includes the following steps:
Step 600: Start.
Step 602: Select a random access preamble.
Step 604: Transmit the random access preamble on an UL component carrier by using a physical random access channel (PRACH) resource corresponding to an anchor component carrier of DL component carriers CC₁-CC_{N}.
Step 606: End.

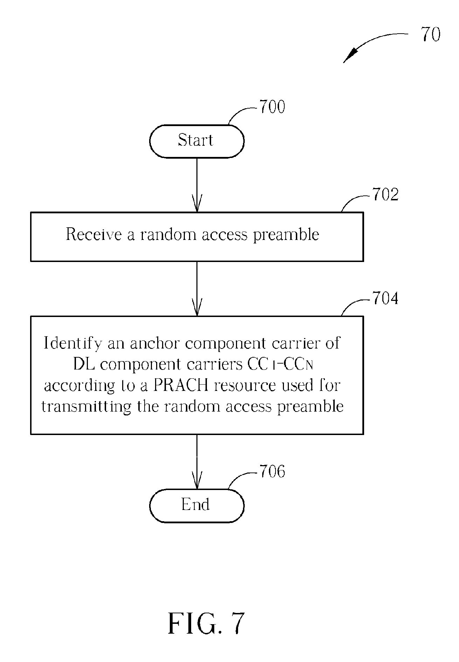

Please refer to FIG. 7, which is a flowchart of an exemplary process 70. The process 70 is utilized for improving component carrier identification in a random access procedure for a network of the wireless communication system 10, and is corresponding to the process 60. The process 70 can be compiled into the program code 214. The process 70 includes the following steps:
Step 700: Start.
Step 702: Receive a random access preamble.
Step 704: Identify an anchor component carrier of DL component carriers CC₁-CC_{N} according to a PRACH resource used for transmitting the random access preamble.
Step 706: End.

The UE performing the process 60 cooperates with the eNB using the process 70. For the UE side, the UE MAC layer randomly selects a random access preamble from a selected preamble group that is included in information received from the UE RRC layer. In another embodiment, the random access preamble may be assigned by the network. The information from the UE RRC layer also comprises available PRACH resources for transmission of the random access preamble. After the random access preamble is selected, the UE transmits the random access preamble on an UL component carrier to the eNB by using a PRACH resource corresponding to an anchor component carrier, which is the only one component carrier that the UE monitors in the RRC idle mode. For example, the UE transmits the random access preamble by using a first PRACH resource corresponding to the DL component carrier CC₁, or transmits the random access preamble by using a second PRACH resource corresponding to the DL component carrier CC₂, depending on whether the DL component carrier CC₁ or CC₂ is the anchor component carrier.

The PRACH resource corresponding to each DL component carrier is different by frequency or transmission time interval (TTI). In other words, the first PRACH resource corresponding to the DL component carrier CC₁ may be a first frequency resource different from a second frequency resource that is the second PRACH resource corresponding to the DL component carrier CC₂. Or, the first PRACH resource corresponding to the DL component carrier CC₁ may be a first TTI resource different from a second TTI resource that is the second PRACH resource corresponding to the DL component carrier CC₂.

For the eNB side, after the random access preamble is received, the eNB recognizes which PRACH resource is used for the UE transmitting the random access preamble, and identifies the anchor component carrier that the UE is on according to the PRACH resource used for the transmission of the random access preamble. For example, when the used PRACH resource is recognized as a first PRACH resource, the eNB identifies that the DL component carrier CC₁ corresponding to the first PRACH resource is the anchor component carrier. In other words, the eNB identifies that the UE is on the DL component carrier CC₁. Or, when the used PRACH resource is recognized as a second PRACH resource, the eNB identifies that the DL component carrier CC₂ corresponding to the second PRACH resource is the anchor component carrier, and so on. Therefore, the eNB can continue the rest of the random access procedure, to transmit a random access response to the UE on the anchor component carrier.

The essential idea shown in the process 60 and the process 70 is the UE uses different PRACH resource corresponding to different DL component carrier to transmit the random access preamble, and the eNB identifies the anchor component carrier by different PRACH resource used for the transmission of the random access preamble. Through the process 60 and the process 70, the eNB identifies the anchor component carrier that the UE is on as soon as possible, and it is not necessary for the eNB to transmit random access responses on all the DL component carriers. Compared to the prior art, the process 60 and the process 70 make the anchor component carrier identification performed more efficiently and save radio resources.

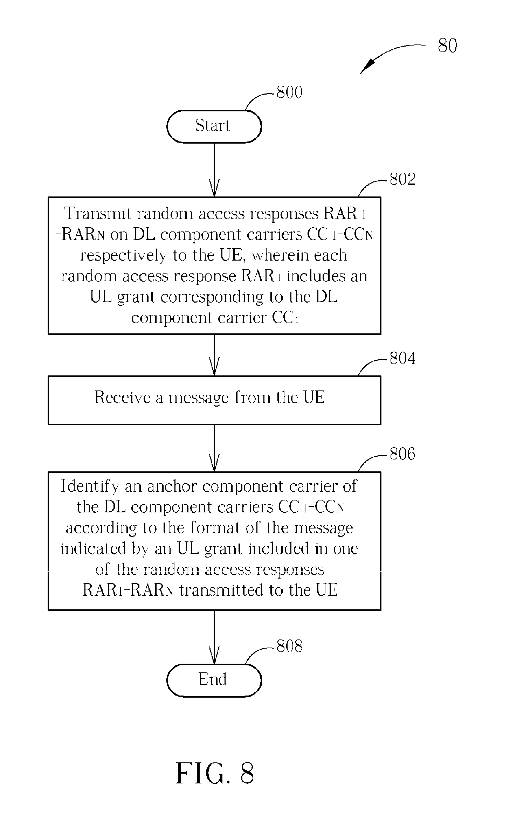

The present invention provides another opportunity to identify the anchor component carrier after the transmission of the random access preamble when the eNB cannot identify the anchor component carrier. Please refer to FIG. 8, which is a flowchart of an exemplary process 80. The process 80 is utilized for improving component carrier identification in a random access procedure for a network of the wireless communication system 10. The process 80 can be compiled into the program code 214. The process 80 includes the following steps:
Step 800: Start.
Step 802: Transmit random access responses RAR₁-RAR_{N} on DL component carriers CC₁-CC_{N} respectively to the UE, wherein each random access response RARᵢ includes an UL grant corresponding to the DL component carrier CCᵢ.
Step 804: Receive a message from the UE.
Step 806: Identify an anchor component carrier of the DL component carriers CC₁-CC_{N} according to the format of the message indicated by an UL grant included in one of the random access responses RAR₁-RAR_{N} transmitted to the UE.
Step 808: End.

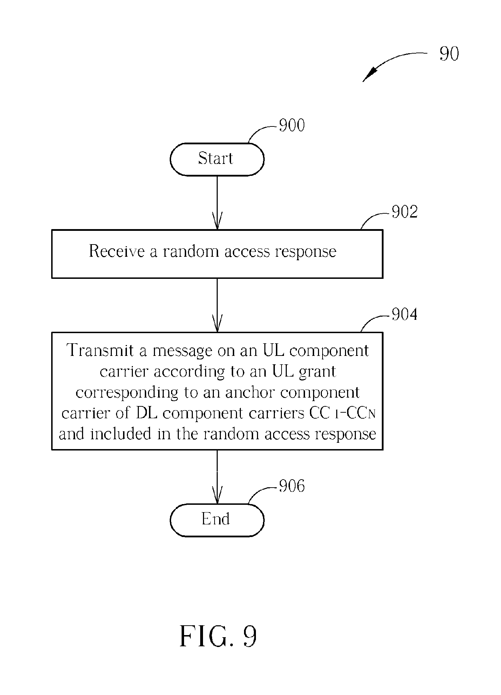

Please refer to FIG. 9, which is a flowchart of an exemplary process 90. The process 90 is corresponding to the process 80, and is utilized for improving component carrier identification in a random access procedure for a UE of the wireless communication system 10. The process 90 can be compiled into the program code 214. The process 90 includes the following steps:
Step 900: Start.
Step 902: Receive a random access response.
Step 904: Transmit a message on an UL component carrier according to an UL grant corresponding to an anchor component carrier of DL component carriers CC₁-CC_{N} and included in the random access response.
Step 906: End.

After receiving a random access preamble from the UE, the eNB transmits random access responses RAR₁-RAR_{N} on the DL component carriers CC₁-CC_{N} to the UE respectively, i.e. the eNB transmits the random access response RAR₁ on the corresponding DL component carrier CC₁, and transmits the random access response RAR₂ on the corresponding DL component carrier CC₂, and so on, to the UE at Step 802. Each transmitted random access response includes an UL grant, which is corresponding to a DL component carrier and indicates the format of a message transmitted by the UE in response to the random access response.

After Step 802 is performed, for the UE side, the UE receives the random access response on the anchor component carrier at Step 902. After the random access response is received, the UE transmits, on the UL component carrier to the eNB, a message using the format indicated by the UL grant corresponding to the anchor component carrier and included in the received random access response at Step 904. This transmitted message is called "message 3" in the current specification.

After Step 904 is performed, for the eNB side, the eNB receives the message 3 at Step 804, recognizes the format of the message 3, and identifies the anchor component carrier according to the format of the message 3 at Step 806. The format of the message 3 is indicated by the UL grant included in the random access response sent on the anchor component carrier. For example, when the format of the message 3 is recognized as a first format, the eNB identifies that the DL component carrier CC₁ is the anchor component carrier because the random access response successfully received by the UE is the random access response RAR₁ which includes the UL grant indicating the first format. Similarly, the eNB identifies that the DL component carrier CC₂ is the anchor component carrier when the format of the message 3 is recognized as a second format.

In this embodiment, the UL grant indicates the format of a message 3 by carrying information of frequency, TTI and modulation and coding scheme (MCS), and therefore the UL grant for each DL component carrier may be different by carrying different information of frequency, TTI or MCS. In other words, a message 3 corresponding to the DL component carrier CC₁ may be transmitted by a frequency, TTI or MCS different from that by which a message 3 corresponding to the DL component carrier CC₂ may be transmitted.

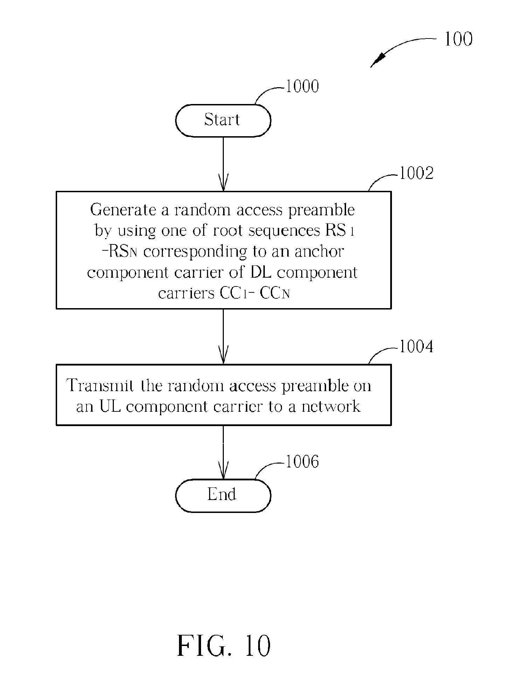

In another embodiment, the process 80 can be performed after the process 70 while the process 90 can be performed after the process 60, so that the process 80 for the eNB and the process 90 for the UE provide the second chance to identify the anchor component carrier when the eNB cannot identify the anchor component carrier after the process 60 and the process 70 are performed. Furthermore, another example of component carrier identification is provided such that the eNB can identify the anchor component carrier after receiving the random access preamble. Please refer to FIG. 10, which is a flowchart of an exemplary process 100. The process 100 is utilized for improving component carrier identification in a random access procedure for a UE of the wireless communication system 10. The process 100 can be compiled into the program code 214. The process 100 includes the following steps:
Step 1000: Start.
Step 1002: Generate a random access preamble by using one of root sequences RS₁-RS_{N} corresponding to an anchor component carrier of DL component carriers CC₁- CC_{N}.
Step 1004: Transmit the random access preamble on an UL component carrier to a network.
Step 1006: End.

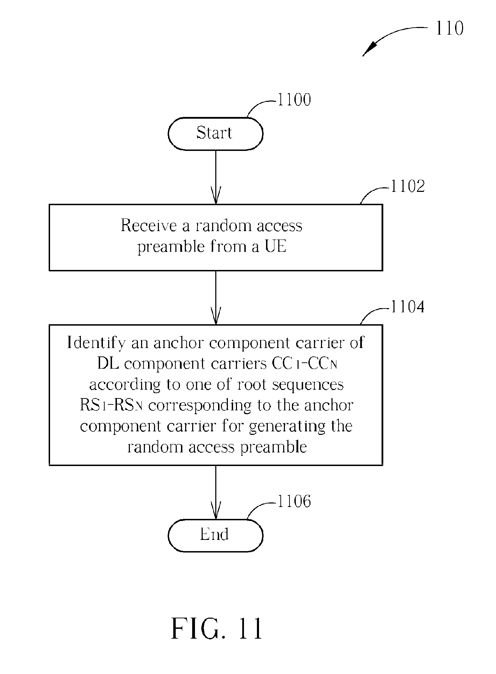

Please refer to FIG. 11, which is a flowchart of an exemplary process 110. The process 110 is corresponding to the process 100, and is utilized for improving component carrier identification in a random access procedure for a network of the wireless communication system 10. The process 110 can be compiled into the program code 214. The process 110 includes the following steps:
Step 1100: Start.
Step 1102: Receive a random access preamble from a UE.
Step 1104: Identify an anchor component carrier of DL component carriers CC₁-CC_{N} according to one of root sequences RS₁-RS_{N} corresponding to the anchor component carrier for generating the random access preamble.
Step 1106: End.

The UE performing the process 100 cooperates with the eNB using the process 110. The random access preamble stated in the process 100 and the process 110 is the physical layer random access preamble that is actually transmitted on the PRACH resource by the UE PHY layer. The physical layer random access preamble is generated by using a root sequence, which is a Zadoff-Chu sequence according to the current PHY specification.

For the UE side, as the process 100, the UE PHY layer generates the physical layer random access preamble by using a root sequence corresponding to the anchor component carrier. The root sequence for each DL component carrier is different. For example, the root sequence RS₁ used when the anchor component carrier is the DL component carrier CC₁ is different from the root sequence RS₂ used when the anchor component carrier is the DL component carrier CC₂. The UE transmits the physical layer random access preamble generated by using the dedicated root sequence to the eNB.

For the eNB side, as the process 110, the eNB receives the physical layer random access preamble from the UE. The eNB can recognize which root sequence the UE uses to generate the physical layer random access preamble. After the root sequence is recognized and obtained, the eNB identifies the anchor component carrier according to the root sequence. For example, the eNB identifies the DL component carrier CC₁ or CC₂ as the anchor component carrier when the root sequence is recognized as the root sequence RS₁ or the root sequence RS₂.

The process 100 and the process 110 may be performed independent to identify the anchor component carrier. In another embodiment, the process 100 and the process 110 may be performed in accompany with the process 60 and the process 70, or in accompany with the process 80 and the process 90 after the eNB receives the message 3 to have the second chance to identify the anchor component carrier.

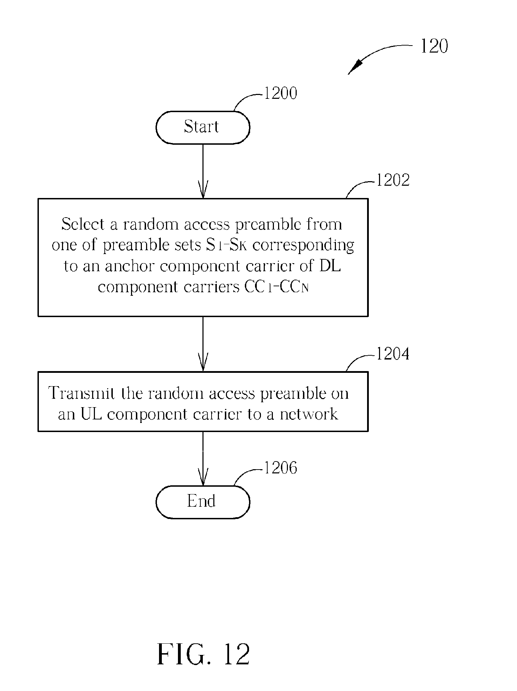

Another example of component carrier identification is provided as follows. Please refer to FIG. 12, which is a flowchart of an exemplary process 120. The process 120 is utilized for improving component carrier identification in a random access procedure for a UE of the wireless communication system 10. The process 120 can be compiled into the program code 214. The process 120 includes the following steps:
Step 1200: Start.
Step 1202: Select a random access preamble from one of preamble sets S₁-S_{K} corresponding to an anchor component carrier of DL component carriers CC₁-CC_{N}.
Step 1204: Transmit the random access preamble on an UL component carrier to a network.
Step 1206: End.

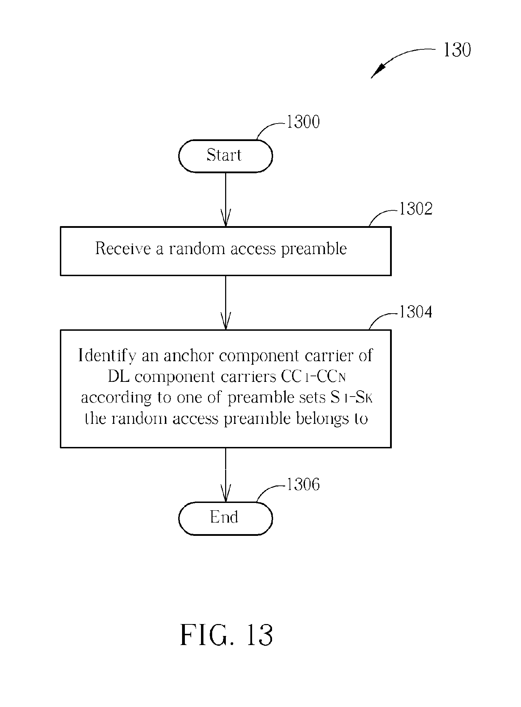

Please refer to FIG. 13, which is a flowchart of an exemplary process 130. The process 130 is corresponding to the process 120, and is utilized for improving component carrier identification in a random access procedure for a network of the wireless communication system 10. The process 130 can be compiled into the program code 214. The process 130 includes the following steps:
Step 1300: Start.
Step 1302: Receive a random access preamble.
Step 1304: Identify an anchor component carrier of DL component carriers CC₁-CC_{N} according to one of preamble sets S₁-S_{K} the random access preamble belongs to.
Step 1306: End.

The UE performing the process 120 cooperates with the eNB using the process 130. The idea of the process 120 and the process 130 is dividing all the available random access preambles into multiple sets and each preamble set is mapped to at least one DL component carrier. To implement the process 120 and the process 130, the current 3GPP specification may require adding a parameter for indicating the preamble set.

For the UE side, as the process 120, the UE selects a random access preamble from a preamble set corresponding to the anchor component carrier, and transmits the selected random access preamble. For the eNB side, as the process 130, the eNB receives the random access preamble sent from the UE, and can recognize which preamble set the received random access preamble belongs to (based on associated parameters, for example.) The eNB identifies the anchor component carrier according to the preamble set the received random access preamble belongs to. For example, when the preamble set is recognized as the preamble set S₁, the eNB identifies the DL component carrier CC₁ corresponding to the preamble set S₁ is the anchor component carrier; when the preamble set is recognized as the preamble set S₂, the eNB identifies the DL component carrier CC₂ corresponding to the preamble set S₂ is the anchor component carrier.

The process 120 and the process 130 may be performed independent to identify the anchor component carrier. Note that, the number of preamble sets K is not necessary to be equal to the number of the DL component carriers N, especially in the case of a large number of the DL component carriers. When two or more DL component carriers correspond to the same preamble set, the eNB may not completely identify the anchor component carrier only according to the preamble set. In this condition, the UE and the eNB may perform the process 120 and the process 130 in combination with the aforementioned processes.

The process 120 and the process 130 may be performed in combination with the process 60 and the process 70. For the UE side, the UE selects a random access preamble from one preamble set corresponding to an anchor component carrier (Step 1202) and transmits the selected random access preamble on the UL component carrier by using a PRACH resource corresponding to the anchor component carrier (Step 604). For the eNB side, the eNB receives the random access preamble (Step 702 or Step 1302), and identifies the anchor component carrier according to both the PRACH resource used by the random access preamble and the preamble set which the received random access preamble belongs to. In addition, the process 120 and the process 130 may be performed in accompany with the process 80 and the process 90 after the eNB receives the message 3, to have the second chance to identify the anchor component carrier.

Please note that the abovementioned steps of the processes 60, 70, 80, 90, 100, 110, 120 or 130 including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

As will become apparent for the person skilled in the art when studying the present application, the aspects of any of the dependent claims 2 to 5 or any related aspect as disclosed above, can of course be combined with the features of any of the independent claims, in particular with claims 6, 8, 9, 10, 12, 14, 15.

In summary, according to the above exemplary processes and communication device, a UE under carrier aggregation uses different PRACH resource, different root sequence for generating the random access preamble, or different preamble set on each component carrier, and the eNB identifies the anchor component carrier the UE is on after receiving the random access preamble. Moreover, the eNB may send random access responses including different UL grants on all DL component carriers, and identifies the anchor component carrier after receiving the message 3. Through these exemplary processes and communication device, the eNB identifies the anchor component carrier as soon as possible and the problem of anchor component carrier confusion in the prior art is solved.

## Claims

1. A method of improving component carrier identification in a random access procedure for a user equipment of a wireless communication system (10), **characterized by** comprising:
transmitting a random access preamble on an uplink component carrier to a
network of the wireless communication system by using a physical random access channel resource corresponding to an anchor component carrier of a plurality of downlink component carriers, so that the network identifies the anchor component carrier according to the physical random access channel resource used for transmitting the random access preamble (604).

2. The method of claim 1, **characterized in that** the physical random access channel resource corresponding to each of the plurality of downlink component carriers is different by frequency or transmission time interval.

3. The method of claim 1 or 2, further comprising:
selecting the random access preamble from a selected preamble group (602).

4. The method of any of the preceding claims, **characterized in that** the random access preamble is assigned by the network.

5. The method of any of the preceding claims, **characterized in that** the anchor component carrier is monitored by the user equipment.

6. A method of improving component carrier identification in a random access procedure for a user equipment of a wireless communication system (10), the method comprising:
receiving a random access response from a network of the wireless
communication system (902); and
**characterized by** transmitting a message on an uplink component carrier to the
network according to an uplink grant, which is corresponding to an anchor component carrier of a plurality of downlink component carriers and included in the random access response, so that the network identifies the anchor component carrier according to a format of the message indicated by the uplink grant (904).

7. The method of claim 6, **characterized in that** the uplink grant for each of the plurality of downlink component carriers is different by carrying different information of frequency, transmission time interval, or modulation and coding scheme.

8. A method of improving component carrier identification in a random access procedure for a user equipment of a wireless communication system (10), the method comprising:
generating a random access preamble by using one of a plurality of root sequences corresponding to an anchor component carrier of a plurality of downlink component carriers, wherein the plurality of root sequences are different (1002); and
**characterized by** transmitting the random access preamble on an uplink component carrier to a network of the wireless communication system, so that the network identifies the anchor component carrier according to the one of the plurality of root sequences for generating the random access preamble (1004).

9. A method of improving component carrier identification in a random access procedure for a user equipment of a wireless communication system (10), the method comprising:
selecting a random access preamble from one of a plurality of preamble sets corresponding to an anchor component carrier of a plurality of downlink component carriers (1202); and
**characterized by** transmitting the random access preamble on an uplink component carrier to a network of the wireless communication system, so that the network identifies the anchor component carrier according to the one of preamble sets the random access preamble belongs to (1204).

10. A method for improving component carrier identification in a random access procedure for a network of a wireless communication system (10), the method comprising:
receiving a random access preamble transmitted from a user equipment of the
wireless communication system (702); and
**characterized by** identifying an anchor component carrier of a plurality of downlink component carriers according to a physical random access channel resource used for transmitting the random access preamble (704).

11. The method of claim 10, **characterized in that** the physical random access channel resource corresponding to each of the plurality of downlink component carriers is different by frequency or transmission time interval.

12. A method for improving component carrier identification in a random access procedure for a network of a wireless communication system (10), **characterized by** comprising:
transmitting a plurality of random access responses on a plurality of downlink component carriers respectively to a user equipment of the wireless communication system, each random access response including an uplink grant corresponding to a corresponding one of the plurality of downlink component carriers (802);
receiving a message from the user equipment (804); and
identifying an anchor component carrier of the plurality of downlink component carriers according to a format of the message indicated by the uplink grant included in one of the plurality of random access responses transmitted to the user equipment (806).

13. The method of claim 12, **characterized in that** the uplink grant for each of the plurality of downlink component carriers is different by carrying different information of frequency, transmission time interval, or modulation and coding scheme.

14. A method for improving component carrier identification in a random access procedure for a network of a wireless communication system (10), the method comprising:
receiving, from a user equipment of the wireless communication system, a random access preamble generated by using one of a plurality of root sequences corresponding to an anchor component carrier of a plurality of downlink component carriers (1102); and
**characterized by** identifying the anchor component carrier according to the one of the plurality of root sequences for generating the random access preamble (1104).

15. A method for improving component carrier identification in a random access procedure for a network of a wireless communication system (10), the method comprising:
receiving a random access preamble transmitted from a user equipment of the wireless communication system (1302); and
**characterized by** identifying an anchor component carrier of a plurality of downlink component carriers according to one of a plurality of preamble sets the random access preamble belongs to (1304).
